# EUROPÄISCHE PATENTSCHRIFT

(11) **EP 1 963 124 B1**
(45) Veröffentlichungstag und Bekanntmachung des Hinweises auf die Patenterteilung: **04.12.2013**
(21) Anmeldenummer: 06829719.1
(22) Anmeldetag: 18.12.2006
(51) Int. Cl.: B60K 6/12, B60K 17/10, B60K 25/00, F15B 1/02

(54) **FAHRZEUG MIT EINEM ANTRIEBSMOTOR ZUM ANTREIBEN EINES FAHRANTRIEBS UND EINER ARBEITSHYDRAULIK**
VEHICLE HAVING A DRIVE ENGINE/MOTOR FOR DRIVING A LOCOMOTIVE DRIVE AND A WORKING HYDRAULIC SYSTEM
VEHICULE DOTE D'UN MOTEUR D'ENTRAINEMENT DESTINE A ENTRAINER UN TRAIN DE ROULEMENT ET UN SYSTÈME HYDRAULIQUE DE TRAVAIL

(30) Priorität: 20.12.2005 DE 102005060998; 07.03.2006 DE 102006010508
(43) Veröffentlichungstag der Anmeldung: 03.09.2008
(73) Patentinhaber: Bosch Rexroth AG, 70184 Stuttgart (DE)
(72) Erfinder: TIKKANEN, Seppo, Dr., 89081 Ulm (DE); MÜLLER, Matthias, 86356 Neusäss (DE); MUTSCHLER, Steffen, 89073 Ulm (DE)
(74) Vertreter: Beder, Jens
(86) Internationale Anmeldenummer: PCT/EP2006/012198
(87) Internationale Veröffentlichungsnummer: WO 2007/071362

(56) Entgegenhaltungen:
- EP-A2- 1 433 648
- WO-A-88/03123
- WO-A-94/16770
- DE-A1- 4 333 564
- DE-U1- 8 615 387
- US-A- 3 700 060

## Beschreibung

Die Erfindung betrifft ein Fahrzeug mit einem Antriebsmotor zum Antreiben eines Fahrantriebs und zum Antreiben mindestens einer Arbeitshydraulik.

Bei Arbeitsmaschinen oder Nutzfahrzeugen ist es die Regel, dass lediglich eine Antriebsmaschine vorgesehen ist, mit der die unterschiedlichen Verbraucher des Fahrzeugs angetrieben werden. Insbesondere ist es üblich, einen einzigen Dieselmotor vorzusehen. Im Falle mehrerer unterschiedlicher Funktionen, beispielsweise einem Fahrantrieb sowie einer zusätzlichen Arbeitshydraulik, wird die durch die Dieselmaschine abgegebene Leistung verzweigt. Den jeweiligen Abnehmern wird dabei entsprechend einer festgelegten Regelstrategie ein Anteil der verfügbaren Gesamtleistung der Dieselbrennkraftmaschine zugewiesen. Dies führt beispielsweise bei kurzfristigem Auftreten von Lastspitzen zu einem Absinken der Motordrehzahl. Nutzfahrzeuge und Baumaschinen, wie Stapler, Radlader oder auch Müllfahrzeuge werden häufig auf niedrige Geschwindigkeiten beschleunigt und anschließend wieder bis zum Stillstand abgebremst. Gleichzeitig oder in den auftretenden Fahrpausen wird mit der Arbeitshydraulik Arbeit verrichtet. Um die beim Bremsvorgang freiwerdende Energie nutzen zu können, ist es aus der DE 32 35 825 A1 bekannt, eine Einrichtung zum Speichern von Energie vorzusehen.

Bei dem aus der DE 32 35 825 A1 bekannten Fahrzeug ist eine Antriebsmaschine über einen Kennungswandler mit einer Antriebsachse verbunden. Die Abtriebswelle der Antriebsmaschine ist mit einem Nebenantrieb gekoppelt, der über eine Kupplung und einen Freilauf mit einer Arbeitshydraulik verbunden ist. Mit der Arbeitshydraulik ist über eine weitere Kupplung eine Hydromaschine koppelbar, welche über eine Leitung mit einem Speicher verbunden ist. Dadurch kann bei Schließen der entsprechenden Kupplungen die Hydromaschine im Schiebebetrieb des Fahrzeugs die kinetische Energie des Fahrzeugs in speicherbare Druckenergie umwandeln. Soll ohne einen auftretenden Schiebebetrieb der Speicher nachgeladen werden, so ist ferner ein Antrieb der Hydromaschine mittelbar über den Nebenantrieb sowie die Kupplungen möglich.

Bei dem vorgeschlagenen Fahrzeug ist es nachteilig, dass die Ansteuerung der Hydromaschine aufwendig über ein Verzweigungsgetriebe sowie mindestens eine Kupplung erfolgen muss. Dies erhöht nicht nur die Verluste beim Speichern der Energie, so dass lediglich ein Teil der Bremsenergie in dem Speicher gespeichert werden kann, sondern erhöht auch bei einer Rückgewinnung der gespeicherten Energie erneut die Verluste. In jedem Fall ist es erforderlich, bei der Rückgewinnung der Energie die Arbeitshydraulik mitzuschleppen, wodurch trotz Nichtnutzung der Arbeitshydraulik erhebliche Verluste entstehen. In einer alternativen Ausführung kann unter Umgehung der Arbeitseinrichtung eine Kopplung mit der Antriebsachse des Fahrzeugs erfolgen. Dabei wird jedoch ein zusätzliches Transfergetriebe erforderlich, um eine Drehzahlanpassung der Hydromaschine zu erreichen.

DE 43 33 564 A1 zeigt ein Fahrzeug gemäß dem Oberbegriff des Anspruchs 1.

WO 88/03123 A1 zeigt einen hydraulischen Arbeitskreislauf bestehend aus zwei Hydromaschinen zum Betreiben von Nebenaggregaten ohne unmittelbare Kopplung der Hydromaschinen mit einem Fahrantrieb.

EP 1 433 648 A2 zeigt einen Fahrantrieb mit bekannter Anordnung von Pumpen und Speichern.

Der Erfindung liegt die Aufgabe zugrunde, ein Fahrzeug mit einer einfachen Möglichkeit zur Energiespeicherung und zum Transfer der Energie zwischen zumindest einer Arbeitshydraulik und einem Fahrantrieb zu schaffen.

Die Aufgabe wird durch das Fahrzeug mit den Merkmalen des Anspruchs 1 gelöst.

Das erfindungsgemäße Fahrzeug weist einen Antriebsmotor zum Antreiben eines Fahrantriebs sowie zum Antreiben mindestens einer Arbeitshydraulik bzw. eines hydraulischen Arbeitskreislaufs auf. Ferner weist das Fahrzeug einen hydraulischen Speicher auf, der mit einer Hydromaschine verbunden ist. Die Arbeitshydraulik umfasst eine Hydropumpe. Die Hydromaschine ist mit einer den Antriebsmotor mit dem Fahrantrieb verbindenden Abtriebswelle verbunden. Die Hydromaschine ist unmittelbar mit dem Fahrantrieb gekoppelt. Der Antriebsmotor ist über die Hydropumpe, die mit der Abtriebswelle sowie unmittelbar mit dem Fahrantrieb verbunden ist, mit der Arbeitshydraulik verbunden.

Das Fahrzeug hat den Vorteil, dass die Kopplung der Hydromaschine mit dem Fahrantrieb an der Abtriebswelle des Motors erfolgt, wo auch das Moment des Antriebsmotors in den Fahrantrieb eingekoppelt wird. Das hat den Vorteil, dass der Kraftfluss unverändert ist, gleich ob das erzeugte Drehmoment aufgrund der gespeicherten Energie oder aufgrund eines Antriebs seitens des Antriebsmotors vorliegt. Weiterhin ist es vorteilhaft, dass die Hydromaschine zum Aufladen des Speichers unmittelbar mit dem Fahrantrieb gekoppelt ist. Eine aufwendige Kraftumleitung über einen Nebenabtrieb oder ein Transfergetriebe kann entfallen.

In den Unteransprüchen sind vorteilhafte Weiterbildungen ausgeführt.

Insbesondere ist es vorteilhaft, die Hydromaschine zur Speicherung mit einem Niederdruckspeicher sowie einem Hochdruckspeicher zu verbinden. Eine solche Verbindung mit einem Niederdruckspeicher und einem Hochdruckspeicher hat den Vorteil, dass auch auf der Saugseite der Hydromaschine durch den Niederdruckspeicher stets ein Mindestdruck aufrechterhalten werden kann. Beim Ansaugen von Druckmittel wird somit das Auftreten von Kavitation verhindert. Der Niederdruckspeicher und der Hochdruckspeicher wirken zu einer hydraulischen Wiege zusammen. Durch das Aufrechterhalten eines Mindestdrucks auf der Saugseite der Hydromaschine können auch solche Hydromaschinen verwendet werden, welche beim Ansaugen von Druckmittel aus einem druckfreien Tankvolumen problematisch sind.

Gemäß einer bevorzugten Ausführung ist der Fahrantrieb des Fahrzeugs als hydrostatisches Getriebe ausgebildet. Das Ausbilden des Fahrantriebs als hydrostatisches Getriebe hat im Zusammenwirken mit der Speicherung von Energie in einem über eine Hydromaschine befüllbaren Speicher den Vorteil, dass während eines Bremsvorgangs eine stufenlose Änderung der Übersetzung in dem hydrostatischen Getriebe erfolgen kann. Damit lässt sich einerseits die Bremskraft individuell einstellen, andererseits aber auch die Drehzahl, mit der die Hydromaschine betrieben wird, anpassen. Mit einer angepassten Drehzahl lässt sich die Hydromaschine zum Speichern der Energie in einem besonders bevorzugten Drehzahlbereich betreiben, wodurch sich wiederum die Verluste verringern lassen. Eine Folge davon ist eine effiziente Speicherung der frei werdenden Bremsenergie.

Dabei ist es weiterhin vorteilhaft, die Hydromaschine als verstellbare hydrostatische Kolbenmaschine auszubilden. Durch die Verstellung des Schluckvolumens der Hydromaschine während eines Bremsvorgangs lässt sich ebenfalls die Bremsleistung variieren. Insbesondere ist es vorteilhaft, ein hydrostatisches Getriebe als Fahrantrieb zu verwenden und zusätzlich die hydrostatische Kolbenmaschine verstellbar auszuführen. Bei geeigneter Steuerung des Übersetzungsverhältnisses des hydrostatischen Getriebes sowie des Schluckvolumens der Hydromaschine lässt sich somit eine besonders effiziente Nutzung der verfügbaren kinetischen Energie des Fahrzeugs erreichen.

Weiterhin ist es vorteilhaft, eine Arbeitshydraulik vorzusehen, welche zumindest eine in einem geschlossenen Kreislauf arbeitende Hydropumpe umfasst. Bei der Verwendung einer in einem geschlossenen Kreislauf arbeitenden Hydropumpe kann nicht nur die durch den Fahrantrieb beim Bremsen des Fahrzeugs frei werdende Energie verwendet werden, sondern es ist auch möglich die Hydromaschine zum Speichern von Energie durch die Arbeitshydraulik anzutreiben. Wird beispielsweise ein doppelt wirkender Hubzylinder mit einer Hydropumpe im geschlossenen Kreislauf der Arbeitshydraulik verbunden, so kann beim Senken einer Last die Hydropumpe der Arbeitshydraulik angetrieben werden. Die dann als Hydromotor wirkende Hydropumpe treibt dann mechanische die Hydromaschine an, welche ihrerseits Druckmittel in den Speicher fördert. Damit ist eine regenerative Nutzung von Energie sowohl von dem Fahrantrieb in Richtung der Arbeitshydraulik als auch von der Arbeitshydraulik in Richtung des Fahrantriebs möglich. Die gespeicherte Energie kann auch in dem selben Kreis, also der Arbeitshydraulik oder dem Fahrantrieb wieder genutzt werden.

Weiterhin ist es vorteilhaft, die Hydromaschine abkuppelbar auszuführen. Bei der erfindungsgemäßen Anordnung der Hydromaschine, die mit einer den Antriebsmotor mit dem Fahrantrieb verbindenden Antriebswelle gekoppelt ist, ist eine solche abkuppelbare Anordnung besonders vorteilhaft. So kann beispielsweise bei vollständig gefülltem Speicher, wenn ein Mitschleppen der Hydromaschine beispielsweise zu Planschverlusten führen würde, die Hydromaschine abgekuppelt werden. Ein Ankuppeln ist jederzeit bei Bedarf möglich, sofern eine Rückgewinnung der Energie erforderlich ist. In dem dazwischen liegenden Zeitraum, in dem beispielsweise eine Überführungsfahrt mit konstanter Geschwindigkeit durchgeführt wird, verursacht die abgekuppelte Hydromaschine dagegen keine Verluste.

Bevorzugte Ausführungsbeispiele des erfindungsgemäßen Fahrzeugs sind in der Zeichnung dargestellt und werden in der nachfolgenden Beschreibung näher erläutert. Es zeigen:
- Fig. 1: eine schematische Darstellung zur Verdeutlichung der erfindungsgemäßen Anordnung;
- Fig. 2: eine schematische Darstellung eines ersten Ausführungsbeispiels eines erfindungsgemäßen Fahrzeugs und
- Fig. 3: eine schematische Darstellung eines zweiten Ausführungsbeispiels eines erfindungsgemäßen Fahrzeugs.

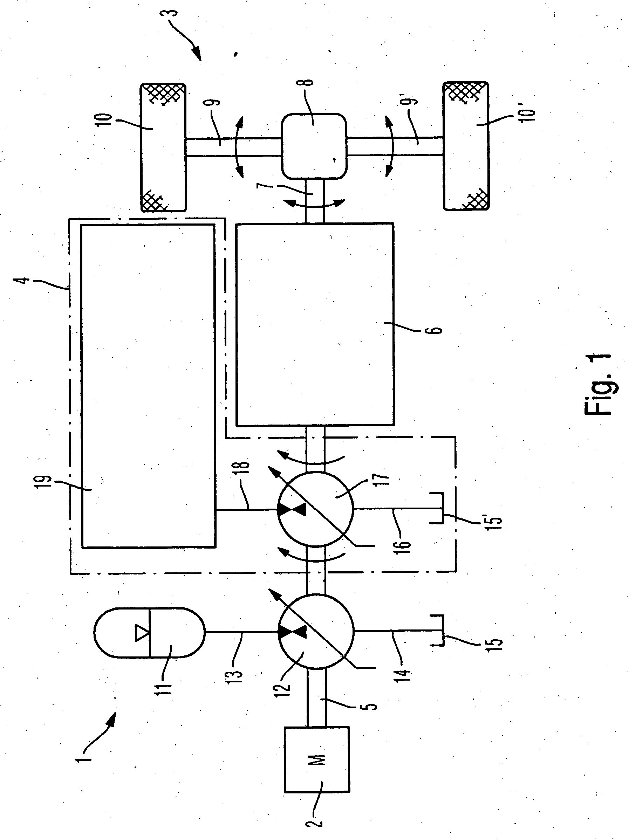

In der Fig. 1 sind zunächst die wesentlichen Bauelemente eines Fahrzeugs mit einem hydraulischen Arbeitskreislauf und einem Fahrantrieb dargestellt. Das Fahrzeug 1 weist einen durch die anzutreibenden Elemente gemeinsam genutzten Antriebsmotor 2 auf. Der Antriebsmotor 2 treibt das Fahrzeug durch Antreiben eines Antriebsachse 3 an. Um zusätzlich zu den Fahraufgaben weitere Arbeitsgeräte betreiben zu können, ist der Antriebsmotor 2 mit einem hydraulischen Arbeitskreislauf 4 verbunden.

Der Antriebsmotor 2 überträgt sein Abtriebsmoment über eine Abtriebswelle 5 an einen Fahrzeugantrieb 6, der über eine Fahrzeugabtriebswelle 7 auf ein Differenzialgetriebe 8 der Antriebsachse 3 wirkt. Das Differenzialgetriebe 8 ist mit einer ersten Halbwelle 9 und einer zweiten Halbwelle 9' verbunden, die mit den angetriebenen Fahrzeugrädern 10, 10' verbunden sind. Der Fahrzeugantrieb 6 kann in beliebiger Weise ausgeführt sein. Insbesondere kann er als rein mechanischer Antrieb gestaltet sein, so dass der Fahrzeugantrieb 6 vorzugsweise aus einem mechanischen Schaltgetriebe besteht. Eingangsseitig ist an dem Fahrzeugantrieb 6 in diesem Fall ein Trennkupplung vorgesehen. Der Fahrantrieb 6 kann ebenfalls als automatisches Getriebe ausgeführt sein, welches über einen hydrodynamischen Wandler mit der Abtriebswelle 5 verbunden ist. Der Einfachheit halber ist in der Fig. 1 lediglich eine angetriebene Fahrzeugachse 3 dargestellt. Es ist jedoch ebenso möglich, dass der Fahrantrieb 6 ein Verteilergetriebe eines Allradantriebs umfasst.

In dem dargestellten Ausführungsbeispiel ist der hydraulische Arbeitskreislauf 4 ein offener Kreislauf. Wird das Fahrzeug 1 abgebremst, so kommt es aufgrund der Massenträgheit zu einem Schiebebetrieb. Das an den Fahrzeugrädern 10, 10' eingeleitet Drehmoment wird entgegengesetzt einem normalen Fahrbetrieb über die Halbwelle 9, 9', das Differentialgetriebe 8 sowie die Fahrzeugabtriebswelle 7 und den Fahrzeugantrieb 6 bis hin zur Abtriebswelle 5 fortgesetzt. Bei gewöhnlichen Fahrzeugen ohne eine Speichereinrichtung stützt sich dieses über die Abtriebswelle 5 zu dem Antriebsmotor 2 hingeführte Moment an dem Antriebsmotor 2 ab. Bei einem Antrieb mit Energierückgewinnung ist, wie es in der Fig. 1 dargestellt ist, ein Speicher 11 zur Speicherung von Druckenergie vorgesehen. Der Speicher 11 ist mit einem kompressiblen Volumen ausgestattet, so dass ein Druckmittel unter Kompression des kompressiblen Volumens in den Speicher 11 hineingefördert werden kann. Um ein Fördern von Druckmittel zu ermöglichen, ist eine Hydromaschine 12 vorgesehen, welche mit der Abtriebswelle 5 verbunden ist. Die Hydromaschine 12 fördert Druckmittel über eine Speicherleitung 13 in den Speicher 11. Das Druckmittel wird über eine Saugleitung 14 aus einem Tankvolumen 15 angesaugt. Die Hydromaschine 12 ist vorzugsweise verstellbar ausgeführt. Die verstellbare hydrostatische Kolbenmaschine ist zu einer Förderung von Druckmittel in zwei Richtungen vorgesehen und kann sowohl als Pumpe wie auch während der Rückgewinnung der gespeicherten Energie als Hydromotor betrieben werden. Bei der Rückgewinnung der gespeicherten Energie wird das unter Druck stehende Druckmittel aus dem Speicher 11 über die Speicherleitung 13 der Hydromaschine 12 zugeführt. Die Hydromaschine 12 wirkt dann als Hydromotor und erzeugt unter Entspannung des Druckmittels ein Drehmoment, welches von der Hydromaschine 12 auf die Abtriebswelle 5 übertragen wird.

Das auf die Abtriebswelle 5 übertragene Drehmoment kann in gleicher Weise genutzt werden, wie es bei einer Erzeugung durch den Antriebsmotor 2 möglich wäre. D.h., dass das durch die Energierückgewinnung erzeugte Drehmoment sowohl dem Fahrzeugantrieb als auch dem hydraulischen Arbeitskreisläuf zur Verfügung gestellt werden kann. Der hydraulische Arbeitskreislauf 4 umfasst ebenfalls eine verstellbare Hydropumpe 17. Die verstellbare Hydropumpe 17 ist ebenfalls für eine Förderung in beide Richtungen vorgesehen. Die Hydropumpe 17 saugt über eine zweite Saugleitung 16 aus einem weiteren Tankvolumen 15' Druckmittel an und fördert dieses über eine Arbeitsleitung 18 zu einer Arbeitshydraulik 19. In dem dargestellten Ausführungsbeispiel ist der hydraulische Arbeitskreislauf 4 als offener Kreislauf ausgeführt.

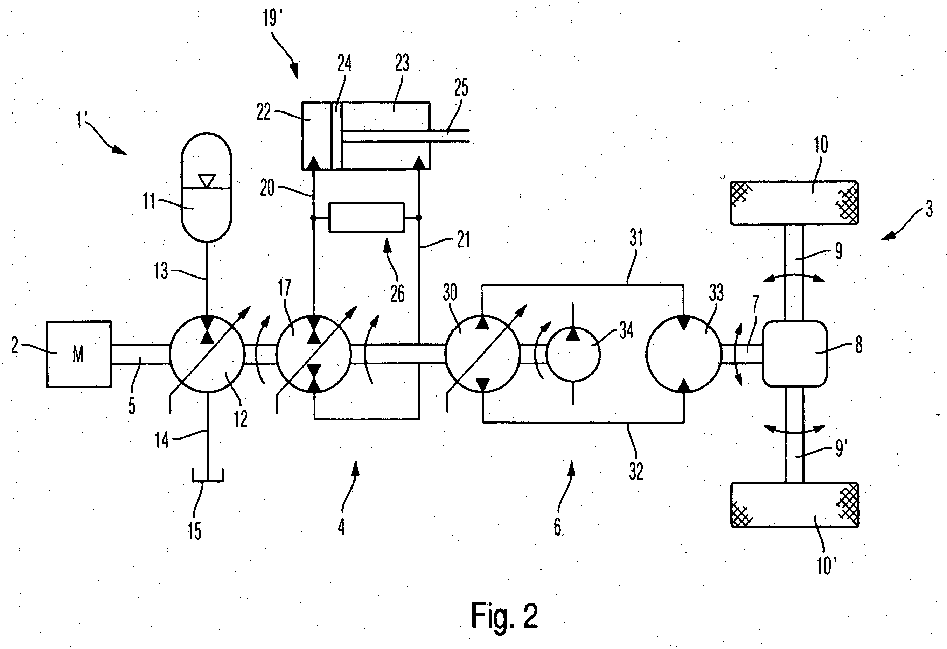

In der Fig. 2 ist ein weiteres Ausführungsbeispiel des erfindungsgemäßen Fahrzeugs dargestellt. Die mit der Fig. 1 übereinstimmenden Merkmale werden zur Vermeidung von Wiederholungen nicht erneut beschrieben und sind in der Fig. 2 mit denselben Bezugszeichen versehen. Der hydraulische Arbeitskreislauf 4 ist im Unterschied zu dem hydraulischen Arbeitskreislauf 4 der Fig. 1 als geschlossener Kreislauf ausgeführt. Die Hydropumpe 17 ist folglich mit einer ersten Arbeitsleitung 20 und einer zweiten Arbeitsleitung 21 verbunden. Die Arbeitsleitungen 20 und 21 sind mit einem doppelt wirkenden Hydraulikzylinder 19' verbunden und münden dort in einen ersten Druckraum 22 bzw. in einen zweiten Druckraum 23 aus. Der erste Druckraum 22 und der zweite Druckraum 23 sind in dem Hydraulikzylinder 19 auf unterschiedlichen Seiten eines Kolbens 24 angeordnet. In Folge der Druckdifferenz zwischen dem ersten Druckraum 22 und dem zweiten Druckraum 23 ergibt sich eine Verschiebung des Kolbens 24. Die Kolbenbewegung des Kolbens 24 wird über eine Kolbenstange 25 beispielsweise auf einen Ausleger eines Baggers oder einen Hebearm eines Radladers übertragen. Aufgrund der Kolbenstange 25 kommt es zu einer Differenz zwischen dem zugeführten und dem verdrängten Volumen in den Druckräumen 22, 23. Zum Ausgleich des Differenzvolumens sind die erste Arbeitsleitung 20 und die zweite Arbeitsleitung 21 über einen Ventilblock 26 miteinander verbunden. Der Ventilblock 26 ermöglicht einen zum Ausgleichen der Differenz erforderlichen volumenstrom. Bei der dargestellten Ausbildung eines geschlossenen Kreislaufs kann der hydraulische Kreislauf 6 auch eine separate Energiespeichervorrichtung in Form eines weiteren Hydrospeichers aufweisen.

Der Fahrzeugantrieb 6 ist mit einem zweiten Ausführungsbeispiel der Fig. 2 als hydrostatisches Getriebe ausgeführt. Das hydrostatische Getriebe umfasst eine Hydropumpe 30, die verstellbar ist und zur Förderung in zwei Richtungen vorgesehen ist. Über eine erste Getriebeleitung 31 und eine zweite Getriebeleitung 32 ist die hydrostatische Pumpe 30 mit einem Hydromotor 33 gekoppelt. In dem dargestellten Ausführungsbeispiel der Fig. 2 ist der Hydromotor 33 als Konstantmotor ausgelegt, welcher in zwei Richtungen durchströmt werden kann. Für weitere Funktionen, wie beispielsweise dem Zuführen von Druckmittel in den nach dem Start des Fahrzeugs zunächst drucklosen Kreislauf des Fahrantriebs 6 ist eine Speisepumpe 34 vorgesehen. Die Speisepumpe 34 ist ebenso wie die Pumpe 30 und die hydrostatische Kolbenmaschine 17 des hydraulischen Arbeitskreislaufs 4 mit der Abtriebswelle 5 verbunden.

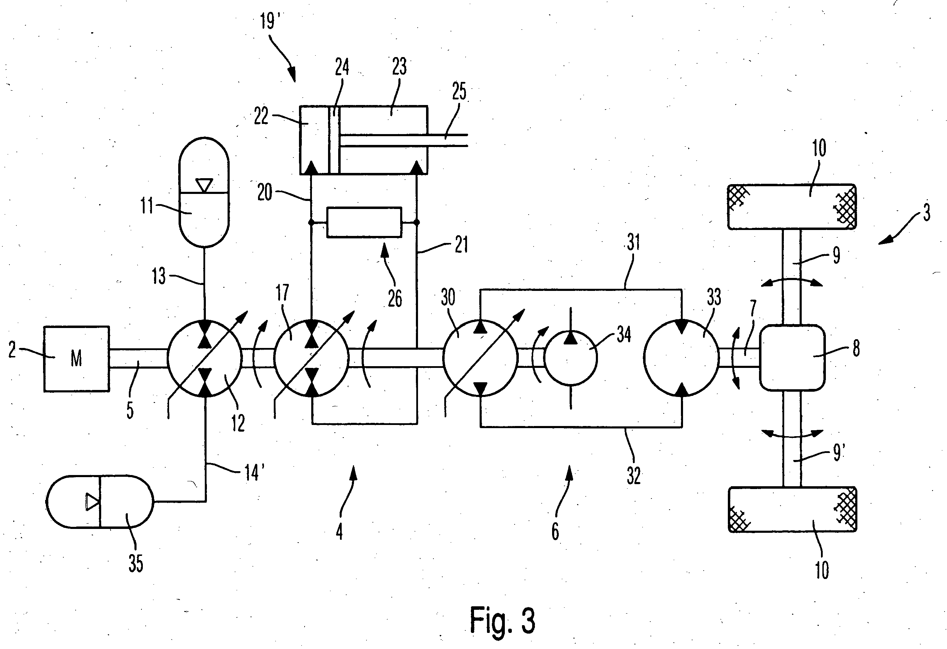

Ein drittes Ausführungsbeispiel ist in der Fig. 3 dargestellt. Der Fahrantrieb 6 sowie der hydraulische Arbeitskreislauf 4 entsprechen dem Ausführungsbeispiel der Fig. 2. Zusätzlich zu dem als Hochdruckspeicher ausgebildeten Speicher 11, welcher zum Speichern von Bremsenergie vorgesehen ist, ist bei dem Ausführungsbeispiel der Fig. 3 ein zweiter Speicher 35 vorgesehen. Der zweite Speicher 35 ist mit der Saugleitung 14' verbunden. Demzufolge saugt die Hydromaschine 12 während des Speicherns von Druckenergie in dem Speicher 11 Druckmittel nicht mehr aus einem Tankvolumen, welches in der Regel drucklos ist, an sondern aus einem zweiten Speicher 35. Der zweite Speicher 35 ist als Niederdruckspeicher ausgelegt. In dem als Niederdruckspeicher ausgelegten zweiten Speicher 35 herrscht ein geringer Überdruck, so dass auch bei Ansaugen eines großen Volumenstroms jeweils ein ausreichender Vordruck existiert um Kavitation auf der Saugseite der Hydromaschine 12 zu vermeiden. Dies ermöglicht die Verwendung von Hydromaschinen, welche aufgrund ihrer geringen Saugleistung ungeeignet sind, um aus einem drucklosen Tankvolumen selbsttätig Druckmittel anzusaugen.

Die beschriebenen Ausführungsbeispiele ermöglichen es sowohl durch das Bremsen des Fahrzeugs 1 über den Fahrantrieb 6 als auch beispielsweise während des Senkens einer Last über den hydraulischen Kreislauf 4 frei werdende Energie in dem Speicher 11, der als Hochdruckspeicher ausgelegt ist, zu speichern. Die dort gespeicherte Energie kann anschließend über die in umgekehrter Richtung betriebene Hydromaschine 12, die dann als Motor wirkt, zurück gewonnen werden. Das durch die Hydromaschine 12 erzeugte Drehmoment wird ebenso wie das Drehmoment der Antriebsmaschine 2 über die Abtriebswelle 5 zur Verfügung gestellt., Durch das an der Abtriebswelle 5 verfügbare Drehmoment ist die Kraftflussrichtung sowohl in dem Fahrantrieb 6 als auch in dem hydraulischen Kreislauf 4 gegenüber einer Erzeugung des Drehmoments durch den Antriebsmotor 2 unverändert.

Die Erfindung ist nicht auf die dargestellten Ausführungsbeispiele beschränkt. Insbesondere sind abweichende Kombinationen einzelner Merkmale der einzelnen Ausführungsbeispiele denkbar.

## Patentansprüche

1. Fahrzeug mit einem Antriebsmotor (2) zum Antreiben eines Fahrantriebs (6) und zum Antreiben mindestens eines hydraulischen Arbeitskreislaufs (4), und mit einem hydraulischen Speicher (11), der mit einer Hydromaschine (12) verbunden ist, wobei der hydraulische Arbeitskreislauf (4) eine Hydropumpe (17) umfasst,
**dadurch gekennzeichnet,**
**dass** die Hydromaschine (12) mit einer den Antriebsmotor (2) mit dem Fahrantrieb (6) verbindenden Abtriebswelle (5) verbunden ist, die Hydromaschine (12) unmittelbar mit dem Fahrantrieb (6) gekoppelt ist, und der Antriebsmotor (2) über die Hydropumpe (17), die mit der Abtriebswelle (5) sowie unmittelbar mit dem Fahrantrieb (6) verbunden ist, mit dem hydraulischen Arbeitskreislauf (4) verbunden ist.

2. Fahrzeug nach Anspruch 1,
**dadurch gekennzeichnet,**
**dass** die Hydromaschine (12) mit einem Niederdruckspeicher (35) und einem Hochdruckspeicher (11) verbunden ist.

3. Fahrzeug nach Anspruch 1 oder 2,
**dadurch gekennzeichnet,**
**dass** der Fahrantrieb (6) ein hydrostatisches Getriebe aufweist.

4. Fahrzeug nach Anspruch 1 bis 3,
**dadurch gekennzeichnet,**
**dass** die Hydromaschine (12) eine verstellbare hydrostatische Kolbenmaschine ist.

5. Fahrzeug nach einem der Ansprüche 1 bis 4,
**dadurch gekennzeichnet,**
**dass** der hydraulische Arbeitskreis (4) zumindest die Hydropumpe (17) und eine Arbeitshydraulik (19) in einem offenen Kreislauf umfasst.

6. Fahrzeug nach einem der Ansprüche 1 bis 4,
**dadurch gekennzeichnet,**
**dass** der hydraulische Arbeitskreis (4) zumindest die Hydropumpe (17) und eine Arbeitshydraulik (19') in einem geschlossenen Kreislauf umfasst.

7. Fahrzeug nach einem der Ansprüche 1 bis 6,
**dadurch gekennzeichnet,**
**dass** die Hydromaschine (12) abkuppelbar ist.

8. Fahrzeug nach einem der Ansprüche 1 bis 7,
**dadurch gekennzeichnet,**
**dass** der hydraulische Arbeitskreislauf (4) eine separate Energiespeichervorrichtung aufweist.

## Claims

1. Vehicle having a drive engine (2) for driving a traction drive (6) and for driving at least one hydraulic working circuit (4), and having a hydraulic accumulator (11) which is connected to a hydraulic machine (12), wherein the hydraulic working circuit (4) comprises a hydraulic pump (17),
**characterized**
**in that** the hydraulic machine (12) is connected to a drive output shaft (5) that connects the drive engine (2) to the traction drive (6), the hydraulic machine (12) is coupled directly to the traction drive (6), and the drive engine (2) is connected to the hydraulic working circuit (4) via the hydraulic pump (17) which is connected to the drive output shaft (5) and directly to the traction drive (6).

2. Vehicle according to Claim 1,
**characterized**
**in that** the hydraulic machine (12) is connected to a low-pressure accumulator (35) and to a high-pressure accumulator (11).

3. Vehicle according to Claim 1 or 2,
**characterized**
**in that** the traction drive (6) has a hydrostatic transmission.

4. Vehicle according to Claims 1 to 3,
**characterized**
**in that** the hydraulic machine (12) is an adjustable hydrostatic piston machine.

5. Vehicle according to one of Claims 1 to 4,
**characterized**
**in that** the hydraulic working circuit (4) comprises at least the hydraulic pump (17) and a working hydraulics unit (19) in an open circuit.

6. Vehicle according to one of Claims 1 to 4,
**characterized**
**in that** the hydraulic working circuit (4) comprises at least the hydraulic pump (17) and a working hydraulics unit (19') in a closed circuit.

7. Vehicle according to one of Claims 1 to 6,
**characterized**
**in that** the hydraulic machine (12) can be decoupled.

8. Vehicle according to one of Claims 1 to 7,
**characterized**
**in that** the hydraulic working circuit (4) has a separate energy store device.

## Revendications

1. Véhicule comprenant un moteur d'entraînement (2) pour entraîner un entraînement de conduite (6) et pour entraîner au moins un circuit de travail hydraulique (4), et comprenant un accumulateur hydraulique (11) qui est connecté à une machine hydraulique (12), le circuit de travail hydraulique (4) comprenant une pompe hydraulique (17),
**caractérisé en ce que**
la machine hydraulique (12) est connectée à un arbre de sortie (5) reliant le moteur d'entraînement (2) à l'entraînement de conduite (6), la machine hydraulique (12) est accouplée directement à l'entraînement de conduite (6), et le moteur d'entraînement (2) est connecté au circuit de travail hydraulique (4) par le biais de la pompe hydraulique (17) qui est connectée à l'arbre de sortie (5) ainsi que directement à l'entraînement de conduite (6).

2. Véhicule selon la revendication 1,
**caractérisé en ce que**
la machine hydraulique (12) est connectée à un accumulateur basse pression (35) et à un accumulateur haute pression (11).

3. Véhicule selon la revendication 1 ou 2,
**caractérisé en ce que**
l'entraînement de conduite (6) présente une transmission hydrostatique.

4. Véhicule selon l'une quelconque des revendications 1 à 3,
**caractérisé en ce que**
la machine hydraulique (12) est une machine à piston hydrostatique réglable.

5. Véhicule selon l'une quelconque des revendications 1 à 4,
**caractérisé en ce que**
le circuit de travail hydraulique (4) comprend au moins la pompe hydraulique (17) et un système hydraulique de travail (19) dans un circuit ouvert.

6. Véhicule selon l'une quelconque des revendications 1 à 4,
**caractérisé en ce que**
le circuit de travail hydraulique (4) comprend au moins la pompe hydraulique (17) et un système hydraulique de travail (19') dans un circuit fermé.

7. Véhicule selon l'une quelconque des revendications 1 à 6,
**caractérisé en ce que**
la machine hydraulique (12) peut être désaccouplée.

8. Véhicule selon l'une quelconque des revendications 1 à 7,
**caractérisé en ce que**
le circuit de travail hydraulique (4) présente un dispositif accumulateur d'énergie séparé.
